# EUROPEAN PATENT APPLICATION

(11) **EP 0 623 448 A1**
(43) Date of publication of application: **09.11.1994**
(21) Application number: 94303255.7
(22) Date of filing: 05.05.1994
(51) Int. Cl.: B29C 49/64, B29C 51/42, B29C 45/72

(54) **Thermoplastic resin molding process**

(30) Priority: 07.05.1993 US 60585
(71) Applicant: GENERAL ELECTRIC COMPANY, Schenectady, NY 12345 (US)
(72) Inventor: Ferguson, Lewis Ellis, Pittsfield, Massachusetts 01201 (US); Furuya, Hiroaki, Pittsfield, Massachusetts 01201 (US); Takatori, Hiroyuki, Pittsfield, Massachusetts 01201 (US)
(74) Representative: Pratt, Richard Wilson

(57) **Abstract**

A molding process for producing molded articles by extrusion blow molding, thermoforming or injection molding, which continually replicates the mold cavity surface comprises heating the mold cavity surface to a temperature below the softening temperature of the thermoplastic resin, bringing the thermoplastic resin into contact with the mold cavity surface while venting the air therebetween, heating the mold cavity surface to a temperature that peaks above the softening temperature of the thermoplastic resin, cooling the mold cavity surface from the peak temperature to a temperature below the softening temperature of the thermoplastic resin, continuing cooling until the molded article is sufficiently rigid for removal from the mold, and then removing the molded article from the mold.

## Description

### Field of the Invention

An improved process for producing a thermoplastic article, the surface of which replicates or reproduces the surface configuration of the mold, including a gloss having a Class A surface and, at cycle times, less than currently disclosed processes for replicating of mold cavity surfaces. In addition, imperfections displayed in the surface of the plastic parts, such as splay, die lines, or pits, are greatly reduced or even eliminated. A Class A surface has been defined in many different ways with no universal definition. One accepted definition is a glossy, smooth and polished surface which should be as smooth as that of a current automobile exterior part made from sheet metal. Another definition is that the visible surface of the article in the finished state is free of exposed glass fibers, flash, sharp edges, visible parting lines, crazing, porosity, hair line cracks, blisters, and obvious repairs, including pits or other imperfections in the surface. In the present invention, another way of determining a Class A surface is based on employing a Gloss Reflectometer and ranking the samples, as described in the Examples of this invention.

The improved process of this invention involves controlling the surface temperature of the mold surface during the molding cycle. The improved process of this invention is applicable to extrusion blow molding, injection molding or thermoforming either by vacuum or pressure thermoforming. The process briefly involves heating the temperature of the surface of the mold against which the thermoplastic resin is to be brought into contact to a temperature below which the surface of the thermoplastic resin is softened under the temperature and pressure of the molding conditions; heating the mold surface to a temperature that peaks above said softening temperature; cooling said mold surface temperature from the peak temperature to a temperature below said softening temperature of the surface of the thermoplastic molded article; continuing cooling of said mold surface until the molded article is sufficiently rigid for removal of said molded article from the mold; and then removing the molded article from the mold.

### Background of the Invention

There is considerable art in the thermoplastic molding technology arena with respect to such molding processes as blow molding, thermoforming and injection molding. The replication or reproduction of the mold surface is an important critical feature of most, if not all, molding processes and techniques. For surface treatment or replication of the mold surface, particularly where high surface gloss, Class A surface, texture surface reproduction or paint finishing is wanted, the common key objective was to keep the mold surface temperature higher than the glass transition temperature (Tg) of the thermoplastic resin for a certain period of time.

United States Patent 5,017,126 discloses that blow molding processes can use heating and cooling steps (column 3, lines 16-27). Also, this patent discloses a blow molding process of extruding a resin portion into a gap between mold halves while the mold is open, blowing gas into the resin portion at least while the mold is closed so that the resin portion is molded to form a hollow article and cooling the molded article just before the mold is opened.

Plastic Technology, June 1988, pages 150-151, discloses a process developed by DuPont, which DuPont calls a "thermal cycling technique". The article states that the surface of a typical blow molded parison drops below the glass transition temperature, preventing the parison from making intimate contact with the surface of the mold. According to Fig. 1, page 150, of the above article, in a typical blow molding process, the temperature of the mold surface and parison surface continues to drop well below the Tg of the resin being molded almost upon initial contact between the resin and mold surface. As stated in the reference, however, the DuPont process maintains the temperature significantly above the Tg of the thermoplastic resin for sufficient time to permit extensive flow of the material to replicate the mold surface. This occurs, according to the reference and Fig. 1, in about the first 10-15 seconds of the molding cycle developed by DuPont, wherein the parison skin temperature stays above the Tg of the resin. In contrast, in a conventional blow molding cycle, the parison skin temperature drops significantly below the Tg of the resin in the first 10-15 seconds. Then, according to the reference, in the DuPont "thermal cycling technique", the parison skin temperature drops to below the Tg of the resin after about the first 10-15 seconds, as shown in Fig. 2, and is then heated to substantially above the Tg of the resin for a period of about 2 minutes. Over a 5 minute period, the inner surface of the parison or now molded article reaches a temperature about equal to the Tg. Final removal of the blow molded article is eventually removed at a time in excess of 5 minutes, since sufficient rigidity of the article must be reached in order for the molded article to be removed from the mold. This adds, according to the article, 60 seconds or more to the normal blow molding cycle.

However, neither of the above references disclose the unique improved process of this invention as disclosed hereinafter.

### Detailed Description of the Invention

In its broadest scope, the present invention is directed to an improved process for producing molded thermoplastic parts by either extrusion blow molding, injection molding or thermoforming which improved process comprises heating the molding surface of a mold to a temperature under molding conditions to below the softening temperature of the surface of the thermoplastic resin to be molded, contacting the mold surface and thermoplastic resin, heating the said mold surface to a temperature peaking above the softening temperature of the surface of the thermoplastic resin that is in contact with the mold surface, cooling the said mold surface from the said peak temperature to below the softening temperature of the said thermoplastic resin surface so as to solidify the surface thereof, continuing cooling the molded thermoplastic resin article until sufficiently rigid for removal from the mold, and then removing the molded thermoplastic resin article from the mold. In the first step of the process, the mold surface, i.e. the mold surface or mold cavity surface that comes into contact with the thermoplastic resin, is heated or is being heated to a temperature that is below the temperature at which the surface of the thermoplastic resin softens under molding conditions of temperature and pressure when the thermoplastic resin is brought into contact with the mold surface. However, the temperature of the mold at this point is not so low that excessive cooling of the thermoplastic resin surface occurs upon contact, but, the temperature of the mold surface is, preferably, slightly below the said softening temperature of the surface of the resin. Heating continues after contact of the mold cavity surface with the thermoplastic resin to a temperature that peaks above the softening temperature of the surface of the thermoplastic resin. The peak temperature and the time cycle to reach peak temperature should be sufficient to allow the surface of the thermoplastic resin that is in contact with the molding surface to soften and flow, but not excessively, in order for the surface of the resin to conform to the mold surface, whether the mold surface is glossy, textured or otherwise. The mold surface is then cooled from said peak temperature to a temperature below the softening temperature of the resin surface, now molded article surface. The peak temperature should, preferably, be just slightly above the said softening temperature of the thermoplastic resin surface, but this temperature, however, depends on the particular thermoplastic resin, the shape and/or the size of the article to be molded and/or the molding conditions. In addition, the peak temperature will probably occur after cooling of the mold surface is started since the hysteresis of the heat curve will continue to a peak temperature before cooling reverses the upward heating cycle. At the temperature where the temperature of the mold surface reverses or starts its downward cycle is referred to as the peak temperature. This cooling of the mold surface to below the softening temperature of the mold article solidifies the surface of the resin after the molded article surface conforms or replicates the surface of the mold. This occurs even though the resin mass behind the surface of the molded article may still be soft or even above the softening temperature of the thermoplastic resin, but which resin mass will solidify as cooling continues. Cooling hysteresis will continue until the molded article is sufficiently rigid to allow removal of the molded article from the mold, even though heating of the mold surface may be started for the next molding cycle. The thermoplastic article is then removed from the mold.

In the extrusion blow molding process of the present invention comprising extruding a molten thermoplastic resin through at least one die orifice to form a parison in an opening between mold sections while the mold is in an open position, closing the mold sections to form the mold cavity around the parison, blowing a gas into the inner cavity of the parison in order to expand the parison so as to contact the thermoplastic resin and mold cavity surface, cooling the molded article to a temperature until it is sufficiently rigid for removal from the mold and then removing the article from the mold, the improvement of the present invention comprising the steps of heating the mold cavity surface of the blow molding mold to a temperature that is below the softening temperature of the surface of the thermoplastic resin parison that comes into contact with the inner surface of the mold, closing the mold sections to form the mold cavity while, preferably, simultaneously venting the air from the mold cavity, blowing a gas into the inner portion of the parison to inflate the parison in order to bring the outer surface of the parison into contact with the inner mold surface, heating the inner surface of the mold to above the softening temperature of the surface of the parison for sufficient time to allow the surface of the parison to conform to the inner surface of the mold, cooling the surface of the mold from above the softening temperature to a temperature below the softening temperature of the surface of the molded article, i.e. the surface of the molded thermoplastic resin in contact with the mold surface, continuing cooling the surface of the mold until the molded article is sufficiently rigid for removal from the mold, and then removing the molded thermoplastic article from the mold. While the above described process seems long, the actual molding cycle can vary depending on the thermoplastic resin employed, the size of the molded article, the wall thickness, molding conditions, etc. The advantage of the improved blow molding process of this invention is that blow molded articles have a surface that replicates the surface of the mold cavity. In other words, the molded article reproduces the surface of the mold such as a textured surface, a grainy surface, a pebble surface, etc., or even a glossy, smooth surface for up to and including a Class A surface for automotive applications. In addition, the improved process eliminates or reduces molded surface imperfections such as splay, die lines, or pits and also is a shorter molding cycle (less than over 300 seconds as disclosed in the DuPont referenced process).

In the improved extrusion blow molding process of this invention, variations can be carried out which will become obvious to those skilled in the art of blow molding after disclosure of this invention. For example, the mold sections can be closing simultaneously with the venting of the air from the mold cavity. Alternatively, venting can start before the mold sections actually start to close. However, it is preferable to close the mold sections before inflating the parison. Alternatively, pre-blowing of the parison may be employed before or during closing of the mold sections or as the parison is dropped between the mold sections. In addition, it is preferable to start venting the air from the mold cavity before contact between the thermoplastic resin and mold cavity surface occurs. Further, more than one extrusion die orifice may be employed such as when blow molding a multilayer bottle wherein more than one layer is extruded simultaneously through multiple extrusion ports to form a multilayer article. Also, the peak temperature of the mold surface may be just slightly above the softening temperature of the surface of the thermoplastic resin article being molded. In addition, the temperature of the mold surface upon contact with the parison surface may be just slightly below the softening temperature of the parison surface. In the improved blow molding process of this invention, it is preferable that venting of the air from the mold cavity surface should, preferably, start before the mold sections completely close around the parison or before the parison is being inflated so as to insure fairly rapid filling of the mold cavity as the parison is inflated. Venting can be by vacuum venting or by atmospheric venting. It is important that air entrapment in the mold between the surface of the parison and the mold cavity surface should be avoided or air removal therefrom be achieved, since air entrapment can result in imperfections in the surface of the molded article such as indentation, pitting, poor surface texture, reproduction, or shadowing of the surface of the molded article around entrapped air pockets.

In addition, it is also essential that if any vent holes are in the mold cavity surface, the vent holes must be kept clear and should not become plugged by the molten resin during forming or blow molding the article. As taught in the prior art, the thermal cycling technique, Plastics Technology June 1988, pages 150-151, the parison "skin temperature remains substantially above the glass transition-point (Tg) for sufficient time to permit extensive flow of the material to replicate the mold surface". As discussed under the Background of the Invention, the skin temperature of the parison, after about the first 10 to 15 seconds, rapidly falls below the Tg of the resin. However, it is then heated to substantially above the Tg of the resin and remains above the resin Tg for almost 2 minutes (please see Fig. 2 of the reference) before the temperature falls below the Tg of the resin. Cooling is continued for sufficient rigidity for removal from the mold. In order to achieve sufficient flow at the interface of the part and the mold, the mold temperature had to be high enough to insure flow in both heated segments of the "thermal cycling technique" and then low enough to permit part removal without deformation, as disclosed in the article. The cycle time may have added to it as much as 60 secs. or more. However, it was discovered that clogging of the vents in the mold surface can occur and subsequent blow molded parts cannot be successfully made with replication of the surface of the mold cavity. In addition, if only partial plugging of the vent holes should occur employing such prior art technique, the molding cycle is greatly increased because of the necessity for slow venting, even though acceptable replication of the mold surface may be achieved. However, continued blow molding runs would eventually plug the vent holes. This does not occur with the improved process of this invention. In accordance with the prior art process, continual cleaning of the vent holes would be required.

In accordance with the improved blow molding process of the present invention, clogging of the vents in the surface of the blow molding mold does not occur, even with continued successive moldings, which is an additional advantage of the process. The initial temperature of mold surface at the interface of the thermoplastic resin and the mold surface is at a temperature sufficient to chill the surface of the parison when brought into contact with the mold surface, thereby essentially preventing clogging of the vent holes in the molding surface. This is followed by heating the mold surface to a temperature which is designed to peak above the softening temperature of the thermoplastic resin sufficiently to soften the parison surface so as to replicate the mold surface, but yet not such extensive flow as to clog the vent holes. This peak temperature need only be slightly above the softening temperature of the surface or skin of the parison so that the resin surface can soften under the molding conditions employed and thereby replicate the surface of the mold. The temperature of the mold is then immediately cooled from the peak temperature to below the softening temperature of the surface of the molded article. Cooling is then continued until the molded article is sufficiently rigid for removal from the mold. The cycle time is considerably shorter than the cycle time of the prior art reference, with continued replication or reproduction of the surface of the mold without essentially plugging of the vent holes. Alternatively, with the prior art, reproduction of parts and mold surface would not be repeatedly obtained because the prior art process enhances substantial flow of the resin, particularly in the second heat-up stage of the thermal cycling technique" and therfore enhances clogging of the mold vents. Frequent cleaning thereof would be required. The improved process of this invention is referred to as the HEAT/COOL process technology.

In the thermoforming process, the same procedure applies as described above with respect to the improved process of this invention, namely, the HEAT/COOL process technology. The improved thermoforming process of this invention comprises, preferably, placing a thermoplastic sheet that has been preheated to a temperature below the softening temperature of the thermoplastic resin, placing the sheet over a mold surface having a configuration that is to be imparted to the plastic sheet, heating the mold surface to a temperature below the softening temperature of the surface of the thermoplastic sheet, applying a vacuum to bring the sheet and mold surface into interfacal contact while venting the air from between the sheet surface and the mold, particularly if the surface of the mold is concave, heating the surface of the mold in contact with the thermoplastic sheet to a peak temperature above the softening temperature of the surface of thermoplastic sheet for a time sufficient to allow the surface of the thermoplastic sheet to sufficiently soften so as to replicate the surface of the mold, cooling the surface of the mold from the peak temperature to below the said softening temperature of the surface of the thermoplastic sheet until sufficiently rigid for removal from the mold and then removing the sheet from the mold. Alternatively, instead of a vacuum on the underside of the sheet that is to come into contact with the mold surface, pressure can be applied to the surface of the thermoplastic sheet that is opposite to the surface of the mold. As pressure is applied to force the sheet onto the surface of the mold, venting of the air occurs, particularly if the surface of the mold is convex or, otherwise, by vacuum or atmospheric venting. Alternatively, a combination of vacuum and pressure may be employed in the thermoforming process.

In the third process, namely injection molding, the same improvement techniques are employed, namely the HEAT/COOL process of this invention. Again, the surface of the mold cavity is heated to a temperature below the softening temperature of the thermoplastic resin interface between the thermoplastic resin and the mold cavity surface so as to slightly chill the resin surface as it contacts the mold surface but yet not to sufficiently impede the flow of the resin to fill the mold cavity, injecting the molten thermoplastic resin into the mold cavity, while simultaneously venting the air therefrom as the molten resin fills the mold cavity, heating the mold cavity surface to a peak temperature above the softening temperature of the resin surface in contact with the mold cavity surface in order for the thermoplastic resir to replicate the inner surface of mold cavity, cooling the mold cavity surface from the said peak temperature to below the said softening temperature of the surface of the molded article and for a time to sufficiently solidify the molded article for removal from the mold and then ejecting the molded article from the mold. Alternatively, the molten resin may be injected into the mold cavity while applying a back pressure to the resin as it fills the mold, i.e. the pressure is reduced in the mold as the resin fills the mold cavity, generally, to allow uniform filling of the mold cavity. Another technique is to keep the mold partially open while injecting the molten resin into the mold cavity. With a high temperature mold cavity surface that is employed in the practice of the improved injection molding process of this invention, better flow and mold filling is obtained, along with enhancement of the physical properties of the molded article.

The thermoplastic resins that can be used in the practice of this invention can be any of the thermoplastic resins that can be blow molded or prepared in sheet form for thermoforming or injection molded. Examples of such thermoplastic resins that can be employed herein and that can be employed in the Examples with essentially the same results are aromatic polycarbonates having an intrinsic viscosity of about at least 0.40 deciliters/gram as measured in methylene chloride at 25°C, polyethylenes (PE), polystyrenes, copolymers and terepolymers of styrene copolymerized with other monomers such as acryolonitrile, butadiene, methymethacrylate, ethylmethacrylate, ethyl methylmethacrylate, etc., high impact polystyrene, which is a polybutadiene with styrene monomer polymerized thereon, polybutylene terephthalates, polyethylene terephthalates, blends of polybutylene terephthalate (PBT) and polyethylene terephthale (PET), polypropylenes, polypropylene terephthalates (PPT), poly(1,4 cyclo-hexanedimethanol) terephthalates, polyetherimides, polyetherimide esters, polyethers, polyether esters, polyphenylene ethers (PPE), crystal or amorphous polyamides (PA), blends of polyphenylene ether and styrene polymers such as polystyrene or high impact polystyrene, etc., or blends of any of the above thermoplastic resins, or blends of any of the above thermoplastic resins with other polymers not recited above. In addition, branched or cross-linked versions of the above polymers, where applicable, can be employed, particularly for blow molding applications.

In addition, one employing polyethylene terephthalate (PET), a nucleating agent can be employed which enhances the molding of the article of this invention. Polyethylene terephthalate resin is generally a difficult moldable resin, and the use of a nucleating agent enhances the faster crystallization of the resin. The greater the degree of crystallization of the PET, the better are its properties in the molded state such as heat distortion temperature, melting temperature and other properties.

Other thermoplastic resins or combinations thereof may be employed in the practice of this invention without detracting from the scope or objective of the invention, providing they are either blow moldable, thermoformable or injection moldable.

In the practice of this invention, the thermoplastic resins employed herein may contain particulate fillers or reinforcing agents such as glass fibers, clay, mica, wollastonite, carbon black, calcium carbonate, magnesium carbonate, or other mineral filler. In addition, flame retardants and heat and light stabilizers can also be employed with the thermoplastic resins disclosed in this invention.

### DESCRIPTION OF PREFERRED EMBODIMENTS

The following Examples are set forth to illustrate the present invention and are not to be construed as limiting the scope of this invention thereto. Unless otherwise indicated, all parts and percentages are on a weight basis.

The surface evaluation of the parts molded in accordance with the following Examples 1-5 was made using a gloss meter and the method of measurement was in accordance with ASTM D523 and ASTM D2457. The instrument employed was a Micro TRI Gloss Reflectometer (BYK by Gardner, Inc.), and the measurement geometry was 60°, which was the angle between the sample surface and the light wave directed to the surface. The measured area of each point on the sample, which in each case was an automobile spoiler, was about 9mm by 18mm. Fourteen (14) random, but predetermined points within a given area on the spoiler samples prepared in Examples 1-5 were measured and were essentially the same points on each sample measured. An average of the 14 points was generally taken as the average of the gloss of the surface. In addition, a GLOSS RANK of each sample was assigned, using the following criteria:
- RANK A -: All 14 points were 90 or higher.
- RANK B -: 1 or 2 points were in the range of 80 to 90, with all others above 90.
- RANK C -: 1 to 5 points were in the range of 50 to 79, with all others being 80 or above.
- RANK D -: 1 to 5 points were in the range of 30 to 49, with all others being 50 or above.
- RANK E -: 6 or more points were lower than 50, with the remaining being 50 or above.
- RANK F -: Most of the points were below 30.

### Example 1

This Example demonstrates the improved process of this invention using a blow molding machine UB 120/115, which was manufactured by UBE Industries, Ltd. of Japan and is a 120 U.S. ton blow molding machine. NORYL® BN9003-701 resin (manufactured and sold by General Electric Company) was employed as the thermoplastic resin, which resin was a blend of polyphenylene ether and a high impact polystyrene. The NORYL resin has a Tg of about 275°F, which is close to the softening temperature of the resin. The UB 120/115 blow molding machine had a maximum shot capacity of 21 lbs., an extrusion rate of 7.7 lbs. per second and a maximum mold clamping force of 120 U.S. tons. The mold cavity surface was heated to a temperature of 265°F, which is below the softening temperature of the NORYL resin, the temperature being monitored by a mold cavity thermocouple. The resin was at a resin stock temperature of about 477°F. As the parison drops between the open mold sections, the molding cycle starts. The mold sections were closed, and the parison was inflated to bring the parison into contact with the heated mold cavity surface. Simultaneously with the closing of the mold sections, the mold cavity was vented, i.e. the air in the space between the mold cavity surface and the parison was vented to remove the air therebetween. The mold cavity surface is then heated to a temperature of about 285°F, which is above the softening temperature of the thermoplastic resin. Cooling of the surface of the mold cavity was started at 285°F but the peak temperature was above 285°F approximately 290°F. When the mold cavity surface reached 270°F, cooling was stopped and heating of the mold surface was started in preparation for the next molding cycle. However, due to cooling hysteresis, the mold surface continued to decrease in temperature. As the mold surface continued to cool, the molded article was exhausted, i.e. the air inside the molded article from inflating the parison was exhausted. After the air was exhausted, the mold sections were opened, and the molded article was removed. The spoiler surface was glossy having a GLOSS RANK A surface and an average gloss of 97.9. The molding cycle time from the molding cycle start at the drop of parison to the next parison drop was 235 seconds.

A second spoiler sample was run as above immediately following the molding of the first sample. The molded article had a GLOSS RANK A surface and an average gloss of 98.2 with a molding cycle of, again, of about 235 seconds. Additional spoiler samples were successively made by the above blow molding process immediately after the above spoiler samples were made with essentially the same results and without any noticeable or significant clogging of the vent holes.

### Example 2

Example 1 was repeated, except that the mold cavity surface was heated to a temperature of 320°F before the parison was dropped between the mold sections. This temperature was substantially above the softening temperature of the NORYL® resin, which was the same resin employed in Example 1. The mold cavity surface was then cooled with cooling being stopped at a temperature of about 260°F. Although cooling of the mold cavity was stopped, cooling continued, because of hysteresis, during which time the mold was exhausted as in Example 1, the mold sections were opened and the part removed. The molded spoiler had a GLOSS RANK A surface and an average gloss of 98.1. The molding cycle to the point where the next parison was dropped was 507 seconds.

Successive spoiler samples were molded immediately following the molding of the first sample of this Example 2. The subsequent molded spoiler parts started to show imperfections in the surface due to entrapped air between the mold cavity surface and parison, which was determined as having been caused by significant plugging of the vent holes from the first several mold samples.

### Example 3

Example 2 was repeated except that the starting temperature, namely the temperature of the surface of the mold cavity was at about 280°F. Clogging of the vent holess was noticeable and significant after several successive moldings with parts having surface imperfections. The surface of the initial parts were GLOSS RANK D which was substantially below a Class A surface and had an average gloss of about 61.

### Example 4

Example 2 was repeated except that the starting temperature, namely the temperature of the surface of the mold, was at about 260°F. While clogging of the vents did not occur with successive moldings, the surface obtained on the molded parts were GLOSS RANK F with an average gloss of about 17. These were not acceptable.

### Example 5

Example 2 was repeated except that the starting temperature, namely the temperature of the surface of the mold cavity was at about 250°F. While clogging of the vents did not occur with successive moldings, the surface obtained on the molded parts were GLOSS RANK F with an average gloss of about 12. These were not acceptable.

It is interesting to note that even when the starting temperature was below the softening temperature of the thermoplastic resin to avoid clogging of the mold vent holes, a Class A surface was not obtained even though clogging of the vent holes did not occur. On the other hand, it was surprisingly discovered that when employing the improved process of the present invention, i.e. heating the mold surface to a temperature below the softening temperature of the resin and then heating the mold surface to above the softening temperature of the resin after closing the mold, followed by cooling the mold surface, a product was obtained having a Class A surface and that upon successive moldings, vent hole clogging did not occur while still obtaining Class A surfaces.

In the present invention, it is to be understood by those skilled in the art that various changes may be made in the particular embodiments described above without departing from the spirit and scope of the invention as defined in the appended claims.

## Claims

1. In a molding process for producing molded thermoplastic articles comprising the steps of at least softening a thermoplastic resin under heat and a pressure ranging from less than atmospheric to more than atmospheric, bringing the thermoplastic resin into contact with the inner surface of a mold so as to conform to the configuration of the inner mold surface, cooling the molded article to below the softening temperature of the thermoplastic resin, and removing the molded article from the mold, the improvement comprising the steps of heating the inner surface of the mold to a temperature below the softening temperature of the surface of the thermoplastic resin that is to contact the inner surface of the mold cavity, bringing the mold surface of the mold cavity and thermoplastic resin into interfacial contact with each other, heating the mold surface of the mold cavity to a peak temperature above the softening temperature of the surface of the thermoplastic resin, cooling the mold cavity surface to below the softening temperature of the surface of the thermoplastic resin molded article, continuing cooling the thermoplastic molded article until sufficiently rigid for removal from the mold, and then removing the molded article from the mold.

2. The improvement of claim 1 consisting essentially of heating the mold cavity surface to a temperature sufficient to chill the surface of the thermoplastic resin upon contact with the mold cavity surface, heating the mold cavity surface to a peak temperature above the softening temperature of the surface of the thermoplastic resin that is to contact the inner mold cavity surface, cooling the mold cavity surface from the peak temperature to below the softening temperature of the surface of the thermoplastic resin, continue cooling the thermoplastic molded article until the molded article is of sufficient rigidity to be removed from the mold, and then removing the molded thermoplastic article from the mold.

3. The process of claim 1 wherein the molding process in a blow molding process for producing blow molded thermoplastic articles, the improvement comprising the steps of heating the inner surface of the mold cavity to a temperature below the softening temperature of the surface of the thermoplastic resin coming into contact with the inner surface of the mold cavity, bringing the mold surface of the mold cavity and thermoplastic resin into interfacial contact with each other, heating the mold surface of the mold cavity to peak temperature above the softening temperature of the thermoplastic resin at the interface of the thermoplastic resin and the mold cavity surface, cooling the mold cavity surface to below the softening temperature of the surface of the thermoplastic resin molded article, continuing cooling of the molded thermoplastic article until it is sufficiently rigid for removal from the mold and then removing the molded article from the mold.

4. The improved process of claim 3 wherein the improvement comprises the steps of extruding a parison between the open section of a mold while heating the surface of the mold cavity to a temperature below the softening temperature of the surface of the parison, simultaneously venting the air from the mold cavity while closing the mold sections around the parison and while inflating the parison so as to bring the mold cavity surface and parison into interfacial contact, heating the mold surface of the mold cavity to a peak temperature slightly above the softening temperature of the surface of the parison, cooling the mold cavity surface from the said peak temperature to below the softening temperature of the surface of the thermoplastic resin, continuing cooling the blow molded thermoplastic resin article until sufficiently rigid for removal from the mold, opening the mold sections and removing the mold article.

5. The improved process of claims 4 wherein venting is under a vacuum.

6. The process of claim 1 for producing a thermoformed article comprising the steps of placing a preheated sheet of thermoplastic resin onto the surface of a mold having a configuration of the final shaped article and molding the thermoplastic sheet, the improvement comprising heating the surface of the mold to a temperature below the softening temperature of the surface of the thermoplastic sheet that is to contact the mold surface, contacting the thermoplastic sheet with the surface of the mold, heating the surface of the mold to a temperature peaking above the softening temperature of the surface of the thermoplastic sheet in contact with the mold surface, cooling the surface of the mold from the said peak temperature to below the said softening temperature of the surface of the thermoplastic resin sheet continuing cooling the thermoformed resin sheet until sufficiently rigid for removal from the mold and then removing the thermoformed thermoplastic article from the mold.

7. The thermoforming process of claim 6 wherein the thermoplastic sheet is brought into contact with the mold surface by vacuum forming.

8. The thermoforming process of claim 6 wherein the thermoplastic sheet is brought into contact with the mold surface by applying a pressure onto the surface of the thermoplastic resin sheet that is opposite the surface of the mold.

9. The process of claim 1 wherein the molding process is an injection molding process for producing injected molded thermoplastic parts, the improvement comprising injecting a molten thermoplastic resin into a mold cavity in which the temperature of the surface of the mold cavity is such as to chill the resin surface as it comes into contact with the mold cavity surface, simultaneously venting the mold cavity as the thermoplastic resin fills the mold cavity, heating the surface of the mold cavity to peak above the temperature at which the interfacial surface between the molten resin and mold cavity surface is chilled, immediately cooling the surface of the mold cavity from said peak temperature to below the temperature at which chilling occurs, continuing cooling the mold cavity surface until the molded part is sufficiently rigid, and then removing the molded part from the mold.

10. The product prepared by the process of any preceding claim.
